# EUROPÄISCHE PATENTSCHRIFT

(11) **EP 2 323 775 B1**
(45) Veröffentlichungstag und Bekanntmachung des Hinweises auf die Patenterteilung: **23.04.2014**
(21) Anmeldenummer: 09781875.1
(22) Anmeldetag: 14.08.2009
(51) Int. Cl.: B29C 47/00, B29C 47/02, B05C 5/02, B29C 47/14

(54) **BESCHICHTUNGSWERKZEUG ZUM AUFTRAGEN EINES FLÜSSIGKEITSFILMS AUF EIN SUBSTRAT**
COATING TOOL FOR APPLYING A LIQUID FILM ON A SUBSTRATE
OUTIL DE REVÊTEMENT POUR LE DEPOT D'UN FILM LIQUIDE SUR UN SUBSTRAT

(30) Priorität: 21.08.2008 DE 102008041423
(43) Veröffentlichungstag der Anmeldung: 25.05.2011
(73) Patentinhaber: FMP Technology GmbH Fluid Measurements & Projects, 91058 Erlangen (DE)
(72) Erfinder: DURST, Franz, 91094 Langensendelbach (DE); ÜNSAL, Bülent, 06170 Yenimhalle (TR)
(74) Vertreter: Gassner, Wolfgang
(86) Internationale Anmeldenummer: PCT/EP2009/060575
(87) Internationale Veröffentlichungsnummer: WO 2010/020594

(56) Entgegenhaltungen:
- EP-A2- 0 039 041
- EP-A2- 1 186 397
- WO-A1-86/02316
- WO-A1-96/20088
- WO-A2-2006/106151
- DE-A1- 2 311 685
- DE-A1- 3 335 252
- GB-A- 2 352 209
- US-A- 2 734 224
- US-A- 4 550 681
- US-A1- 2003 001 302

## Beschreibung

Die Erfindung betrifft ein Beschichtungswerkzeug zum Auftragen eines Flüssigkeitsfilms auf ein Substrat nach dem Oberbegriff des Anspruchs 1.

Ein solches Beschichtungswerkzeug ist aus der WO 96/20088 A1 bekannt.

Die Erfindung betrifft allgemein das Gebiet der Beschichtung von flächigen Substraten, beispielsweise Papier oder dgl., mit einer Flüssigkeit. Es wird insoweit verwiesen auf Durst, F. et al. "Stabilität von Filmen in der Fließer-Filmbeschichtung", Coating, 12/89, 1/90, 2/90. Daraus sind, insbesondere zur sogenannten Vorhangbeschichtung, Schlitzfließwerkzeuge bekannt, bei denen ein Mundstück eine Schlitzdüse zum Erzeugen eines dünnen Films der für die Beschichtung verwendeten Flüssigkeiten aufweist. Die Schlitzdüse kann eine Breite von bis zu 7 m aufweisen. Sie ist üblicherweise aus zwei in einander gegenüberliegender Anordnung montierten Schlitzdüsenelementen gebildet. Eine Schlitzweite der Schlitzdüse liegt üblicherweise im Bereich von 50 bis 400 µm.

Die nach dem Stand der Technik beispielsweise aus der US 5,234,649 bekannten Beschichtungswerkzeuge sind in ihrer Ausgestaltung spezifisch für die damit verarbeitete Flüssigkeit. Schon bei einer geringen Änderung der Beschichtungsparameter, beispielsweise der Viskosität der Flüssigkeit, der Umgebungsbedingungen oder dgl., ändert sich der Massedurchsatz bzw. eine Masseflussrate der Flüssigkeit über die Breite der Schlitzdüse. D.h. der Massedurchsatz der Flüssigkeit ist über die Breite der Schlitzdüse hinweg nicht mehr konstant. Infolge dessen weist ein mit einer konstanten Geschwindigkeit relativ zur Schlitzdüse bewegtes zu beschichtendes Substrat überall dort, wo der Massedurchsatz durch die Schlitzdüse erhöht ist, eine erhöhte Beschichtungsdicke auf. Solche Variationen in der Beschichtungsdicke sind unerwünscht. Sie führen bei nachfolgenden Verarbeitungsschritten des beschichteten Substrats zu vielerlei Problemen.

Aufgabe der Erfindung ist es, die Nachteile nach dem Stand der Technik zu beseitigen. Es soll insbesondere ein Beschichtungswerkzeug angegeben werden, welches über die gesamte Breite der Schlitzdüse hinweg, auch bei einer Änderung der Umgebungsbedingungen, einen gleichmäßigen Massedurchsatz aufweist. Nach einem weiteren Ziel der Erfindung soll das Beschichtungswerkzeug universell einsetzbar sein, so dass damit auch unterschiedliche Flüssigkeiten, insbesondere Flüssigkeiten unterschiedlicher Viskosität, mit einem über die gesamte Breite der Schlitzdüse hinweg konstanten Massedurchsatz auf ein Substrat auftragbar sind.

Diese Aufgabe wird durch die Merkmale des Anspruchs 1 gelöst. Zweckmäßige Ausgestaltungen der Erfindung ergeben sich aus den Merkmalen der Ansprüche 2 bis 11.

Mit der Erfindung gelingt es auf überraschend einfache Weise, den Druck der an der Schlitzdüse bzw. der an der Austrittsöffnung anstehenden Flüssigkeit über deren gesamte Breite hinweg, auch bei einer Änderung der Umgebungsbedingungen, weitgehend konstant zu halten. Mit dem vorgeschlagenen Beschichtungswerkzeug kann auch bei der Verwendung unterschiedlicher Flüssigkeiten, insbesondere Flüssigkeiten unterschiedlicher Viskosität, jederzeit ein konstanter Massedurchsatz über die gesamte Breite der Schlitzdüse hinweg sichergestellt werden. Das vorgeschlagene Beschichtungswerkzeug ist also äußerst universell. Damit entfällt die Notwendigkeit der Anfertigung spezifischer auf die Verarbeitung der jeweiligen Flüssigkeit angepasster Beschichtungswerkzeuge.

Die Querschnittsfläche der Verteilungskanäle kann sich auf das 1,5- bis 30-Fache, vorzugsweise das 5- bis 20-Fache, besonders bevorzugt auf das 8- bis 15-Fache, vergrößern. Der jeweilige Vergrößerungsfaktor der Querschnittsfläche kann über die zweite Breite hinweg variiert werden. Damit können über die dritte Breite eventuell konstruktionsbedingt bestehende Druckdifferenzen kompensiert werden.

Nach einer Ausgestaltung der Erfindung erstrecken sich die Verteilungskanäle vom Kanal bis in die Nähe der Schlitzdüse. Sie können sich bis zur Schlitzdüse erstrecken oder aber auch bis zu 30 mm vor der Schlitzdüse enden.

Nach einer besonders einfachen Ausgestaltung ist vorgesehen, dass die Verteilungskanäle durch die sich im Wesentlichen senkrecht zur Schlitzdüse verlaufenden Wände begrenzt sind. Dabei können die Wände eine Höhe im Bereich von 3 bis 50 mm haben. Die Wände verlaufen in dieser Ausgestaltung fächerförmig vom Kanal in Richtung zu der Schlitzdüse. Die Wände erstrecken sich zweckmäßigerweise von einer den Verteilungsraum begrenzenden vorderen Schlitzdüsenplatte zu einer gegenüberliegend angeordneten hinteren Schlitzdüsenplatte. Zweckmäßigerweise sind die Wände bezüglich einer senkrecht zu den Schlitzdüsenplatten und mittig durch den Kanal verlaufenden Symmetrieebene symmetrisch angeordnet.

Eine in Strömungsrichtung zunehmende Querschnittsfläche der Verteilungskanäle kann einfach dadurch realisiert werden, dass ein zwischen benachbarten Wänden gebildeter Abstand vom Kanal zur Schlitzdüse hin zunimmt.

Nach einer weiteren Ausgestaltung ist vorgesehen, dass zumindest mehrere der Wände zumindest einen Durchbruch aufweisen. Dabei können die Durchbrüche in den jeweiligen Wänden im Bereich deren kanalseitigen ersten Enden und/oder im Bereich deren schlitzdüsenseitigen zweiten Enden vorgesehen sein. - Das Vorsehen der vorgeschlagenen Durchbrüche trägt weiter dazu bei, dass der an der Schlitzdüse anstehende Flüssigkeitsdruck über deren gesamte Breite hinweg gleichmäßig ist.

Erfindungsgemäß ist jeder der Verteilungskanäle mit einem dazu korrespondierenden, im Kanal vorgesehenen Zuführkanal verbunden. Sofern der Kanal in Strömungsrichtung eine konstante Querschnittsfläche aufweist, weisen auch die Zuführkanäle eine konstante Querschnittsfläche auf. Durch das Vorsehen der Zuführkanäle wird ein Flüssigkeitsstrom bereits im Kanal in Teilströme unterteilt, welche jeweils im Wesentlichen denselben Massedurchsatz aufweisen. Infolgedessen wird damit auch der Massedurchsatz durch die Verteilungskanale und damit über die gesamte Schlitzbreite hinweg besonders gleichmäßig.

In einer konstruktiv besonders einfachen Ausgestaltung erstrecken sich die Wände zur Begrenzung der Zuführkanäle bis in den Kanal. D. h. in diesem Fall begrenzen die vom Kanal bis in den Verteilungsraum durchlaufenden Wände sowohl die Zuführ- als auch die Verteilungskanäle.

Nach einer weiteren vorteilhaften Ausgestaltung ist vorgesehen, dass die Verteilungs- und/oder Zuführkanäle Bestandteil zumindest eines in den Verteilungsraum einsetzbaren Montageelements sind. Dabei kann das Montageelement so ausgestaltet sein, dass die daran vorgesehenen Zuführkanäle sich von genau einem Kanal zur Schlitzdüse erstrecken. In ein Beschichtungswerkzeug mit mehreren Kanälen können also mehrere derartige Montageelemente nebeneinander eingesetzt werden.

Nach einer weiteren besonders kostengünstigen Ausgestaltung ist vorgesehen, dass das Montageelement aus Kunststoff hergestellt ist. Damit kann auf äußerst einfache und kostengünstige Weise eine Aus- oder Nachrüstung eines Beschichtungswerkzeugs erfolgen, um damit die erfindungsgemäßen Vorteile zu erzielen. Die die Zuführ- und/oder Verteilungskanäle begrenzenden Wände können aber auch aus Edelstahl, Invarstahl oder Aluminium hergestellt sein. Insbesondere ist es auch möglich, die die Zuführ- und/oder Verteilungskanäle bildenden Wände einstückig mit der zweiten Schlitzdüsenplatte herzustellen. Daneben ist es auch möglich, die den Zuführ- und/oder Verteilungskanälen zugewandten Innenseiten der Wände aus einer Keramik, beispielsweise WC oder SiC, herzustellen. Auch eine Beschichtung der Wände mit einem Kunststoff, beispielsweise Tetrafluorethylen, wird als vorteilhaft angesehen.

Die Erfindung kann auch auf herkömmliche 2-Kammer-Beschichtungswerkzeuge angewendet werden, bei denen zwischen der Schlitzdüse und dem Verteilungsraum ein zur Schlitzdüse hin sich öffnender Pufferraum vorgesehen ist, welcher mit dem Verteilungsraum über einen sich im Wesentlichen über die zweite Breite erstreckenden schlitzartigen Durchgang verbunden ist. Das Vorsehen eines stromabwärts des mit dem erfindungsgemäßen Verteilungskanälen versehenen Verteilungsraums vorgesehenen Pufferraums trägt weiter zu einer besonders homogenen Druckverteilung der an der Schlitzdüse anstehenden Flüssigkeit bei.

Nachfolgend werden Ausführungsbeispiele anhand der Zeichnungen näher erläutert. Es zeigen:
- Fig. 1a, b: die Änderung der Masseflussrate über dem Abstand von der Einströmöffnung für Flüssigkeiten unterschiedlicher Viskosität bei einem herkömmlichen Beschichtungswerkzeug im Vergleich zu einem erfindungsgemäßen Beschichtungswerkzeug,
- Fig. 2: die Änderung der Masseflussrate über dem Abstand von der Einströmungsöffnung für Flüssigkeiten unterschiedlicher Viskosität bei einem erfindungsgemäßen Beschichtungswerkzeug,
- Fig. 3: perspektivische Ansichten eines ersten erfindungsgemäßen Beschichtungswerkzeugs,
- Fig. 4 a - d: verschiedene Ansichten eines erfindungsgemäßen Montageelements,
- Fig. 5: perspektivische Ansichten eines zweiten erfindungsgemäßen Beschichtungswerkzeugs,
- Fig. 6: perspektivische Ansichten eines dritten erfindungsgemäßen Beschichtungswerkzeugs und
- Fig. 7: eine perspektivische Ansicht eines vierten erfindungsgemäßen Beschichtungswerkzeugs.

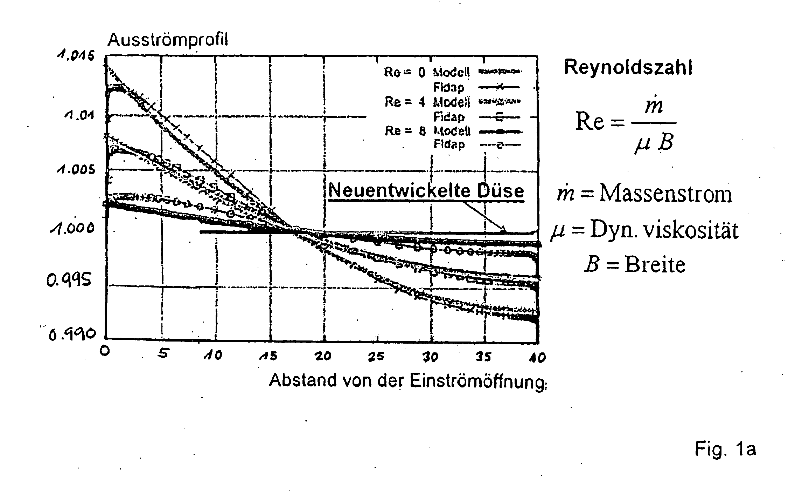

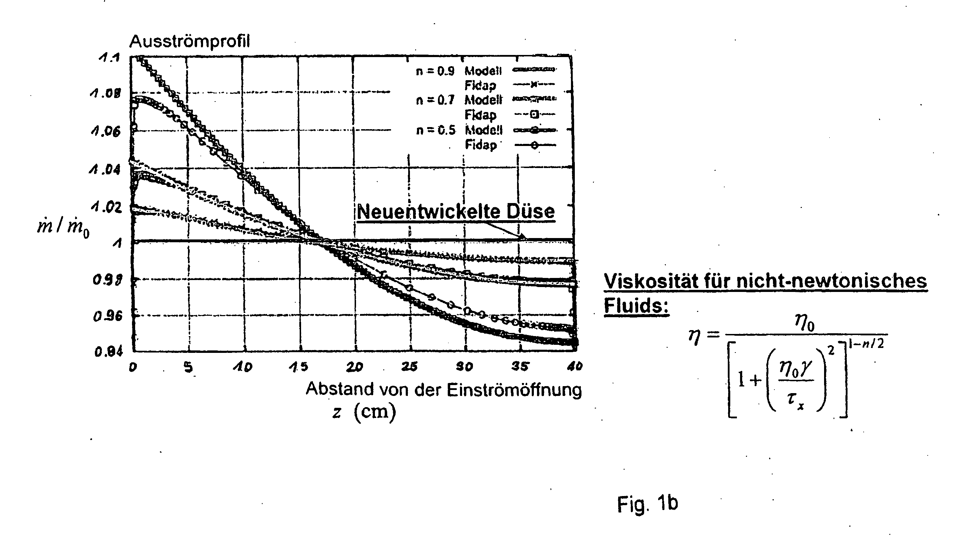

Die Fig. 1a und 1b zeigen jeweils die Änderung des Massedurchflusses bzw. der Masseflussrate *ṁ*/*ṁ*₀ über dem Abstand von der Einströmöffnung, d. h. über dem Abstand einer durch den Kanal verlaufenden Mittelebene M. Fig. 1a zeigt das Verhalten newtonscher Fluide. Fig. 1b zeigt das Verhalten nicht-newtonscher Fluide. Wie aus den Fig. 1a und 1b ersichtlich ist, nimmt bei der Verwendung herkömmlicher Beschichtungswerkzeuge die Masseflussrate mit zunehmenden Abstand von der Mittelebene M, d. h. zum Rand der Schlitzdüse hin, kontinuierlich ab. Im Falle der "neuentwickelten Düse" bzw. des erfindungsgemäßen Beschichtungswerkzeugs bleibt dagegen die Masseflussrate sowohl bei der Verwendung newtonscher als auch nicht-newtonscher Fluide über die gesamte Breite der Schlitzdüse hinweg konstant.

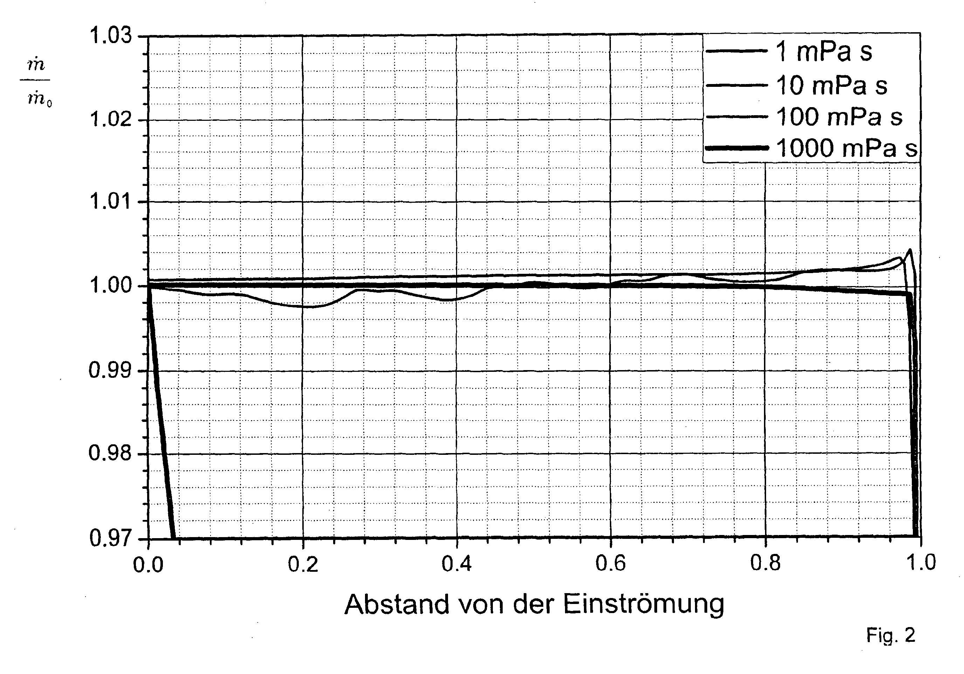

Fig. 2 zeigt die Änderung der Masseflussrate *ṁ*/*ṁ*₀ über dem normierten Abstand von der Einströmöffnung für ein erfindungsgemäßes Beschichtungswerkzeug. Es ist erkennbar, dass die Masseflussrate über die gesamte Schlitzbreite hinweg etwa denselben Wert aufweist. Besonders bemerkenswert ist, dass die Masseflussrate beim erfindungsgemäßen Beschichtungswerkzeug praktisch unabhängig von der Viskosität der Flüssigkeit ist.

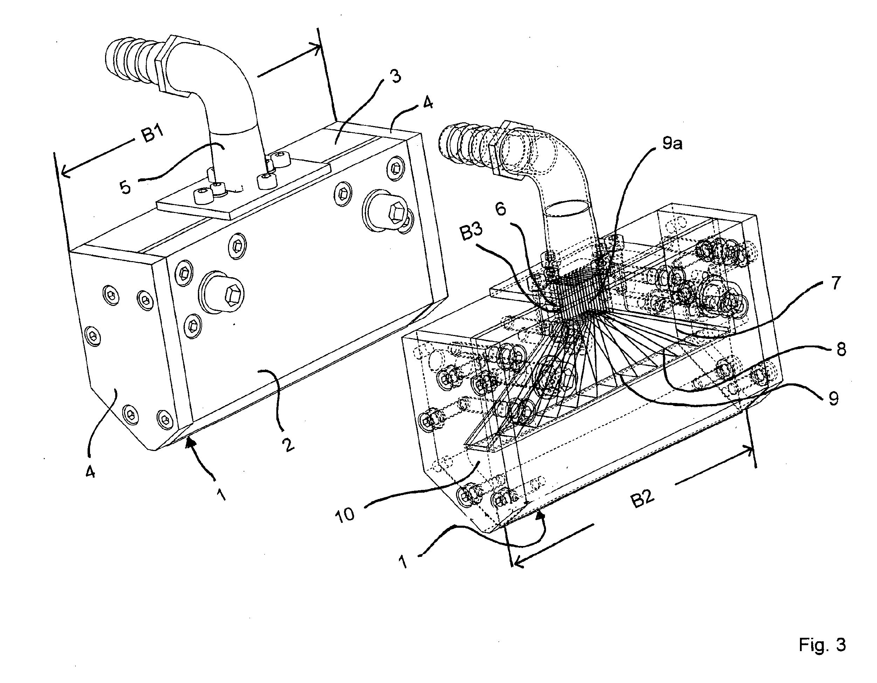

Fig. 3 zeigt perspektivische Ansichten eines ersten erfindungsgemäßen Beschichtungswerkzeugs. Das Beschichtungswerkzeug weist eine Schlitzdüse 1 zwischen einer ersten Schlitzdüsenplatte 2 und einer im Wesentlichen parallel zur ersten Schlitzdüsenplatte 2 angeordneten zweiten Schlitzdüsenplatte 3 auf. Mit dem Bezugszeichen 4 sind seitlich an den Schlitzdüsenplatten 2, 3 angebrachte Seitenplatten bezeichnet. Ein Zuführrohr 5 zur Zufuhr einer Flüssigkeit mündet in einen in der zweiten Schlitzdüsenplatte 3 gebildeten Kanal 6. Der Kanal 6 wiederum mündet in einen stromabwärts davon in der zweiten Schlitzdüsenplatte 3 vorgesehenen Verteilungsraum 7, welcher sich in Stromrichtung konisch erweitert.

Im Kanal 6 sowie im Verteilungsraum 7 erstrecken sich senkrecht zu den Schlitzdüsenplatten 2, 3 Wände 8. Die sich zwischen den Schlitzdüsenplatten 2, 3 erstreckenden Wände 8 begrenzen Verteilungskanäle 9. Die Verteilungskanäle 9 weisen im Verteilungsraum 7 in Stromrichtung einen sich erweiternden Querschnitt auf. Stromabwärts des Verteilungsraums 7 ist ein Schlitzdüsenraum 10 vorgesehen, welcher sich in Stromrichtung zur Schlitzdüse 1 hin verjüngt.

Eine erste Breite des Beschichtungswerkzeugs zwischen den Außenflächen der Seitenplatten 4 ist mit B1 bezeichnet, eine zweite Breite der Schlitzdüse 1 ist mit B2 bezeichnet, und eine dritte Breite B3 des Kanals 6 ist mit B3 bezeichnet. Wie aus Fig. 3 ersichtlich ist, ist die dritte Breite B3 kleiner als die zweite Breite B2. Die zweite Breite B2 ist kleiner als die erste Breite B1. Die zweite Breite B2 entspricht im Wesentlichen der ersten Breite B1, d. h. die erste Breite B1 unterscheidet sich von der zweiten Breite B2 im Wesentlichen lediglich durch die Dicke der Seitenplatten 4.

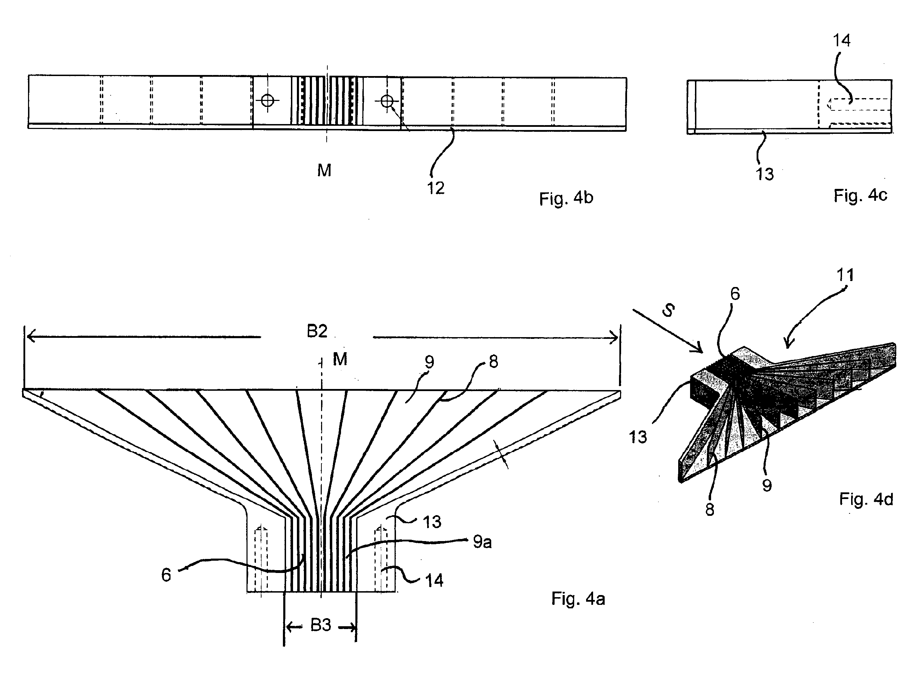

Die Fig. 4 a - d zeigen eine Draufsicht, eine erste Seitenansicht, eine zweite Seitenansicht sowie eine perspektivische Ansicht eines Montageelements 11, welches in den in der zweiten Schlitzdüsenplatte 3 gebildeten Verteilungsraum 7 eines Beschichtungswerkzeugs einsetzbar ist. Wie insbesondere aus den Fig. 4 a und 4 d ersichtlich ist, verlaufen die Wände 8 im Bereich des Kanals 6 zunächst parallel und bilden hier eine Vielzahl von Zuführkanälen 9a. Eine Strömungsrichtung S einer durch den Verteilungsraum 7 und/oder das Montageelement 11 fließenden Flüssigkeit ist mit dem Bezugszeichen S bezeichnet. Stromabwärts des Kanals 6 biegen die Wände 8 ab, und zwar in eine Richtung weg von einer durch den Kanal 6 verlaufenden Symmetrie- bzw. Mittelebene M. Das Montageelement 11 weist eine Grundplatte 12 auf, von der sich die Wände 8 sowie seitliche Begrenzungselemente 13 erstrecken. In den seitlichen Begrenzungselementen 13 können Gewindebohrungen 14 zur Befestigung des Montageelements 11 vorgesehen sein. Das Montageelement 11 ist zweckmäßigerweise aus Kunststoff, vorzugsweise aus spritzgegossenem Kunststoff, hergestellt.

Bei dem in Fig. 4 a - d gezeigten Montageelement 11 ist genau ein Kanal 6 vorgesehen. Es ist aber auch denkbar Montageelemente 11 vorzusehen, welche aus mehreren der gezeigten Montageelemente 11 kombiniert sind, d. h. bei denen mehrere Kanäle 6 vorgesehen sind.

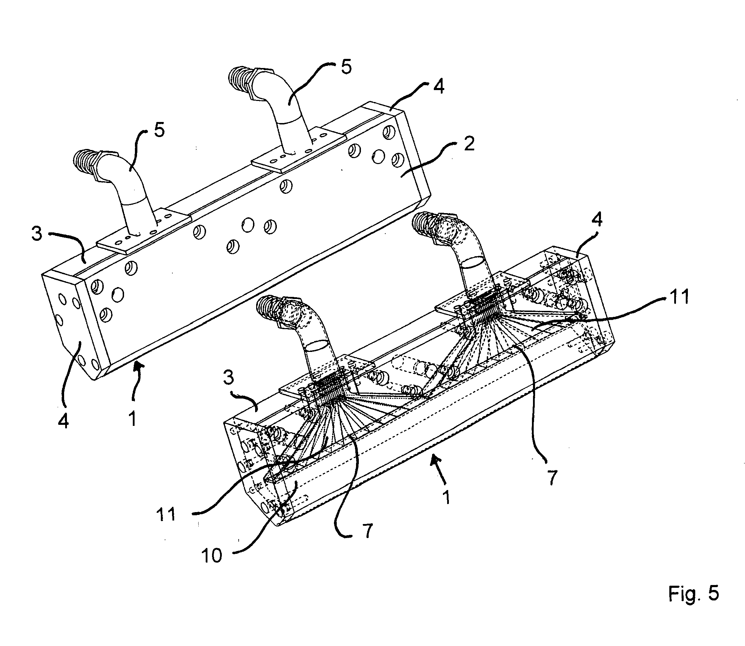

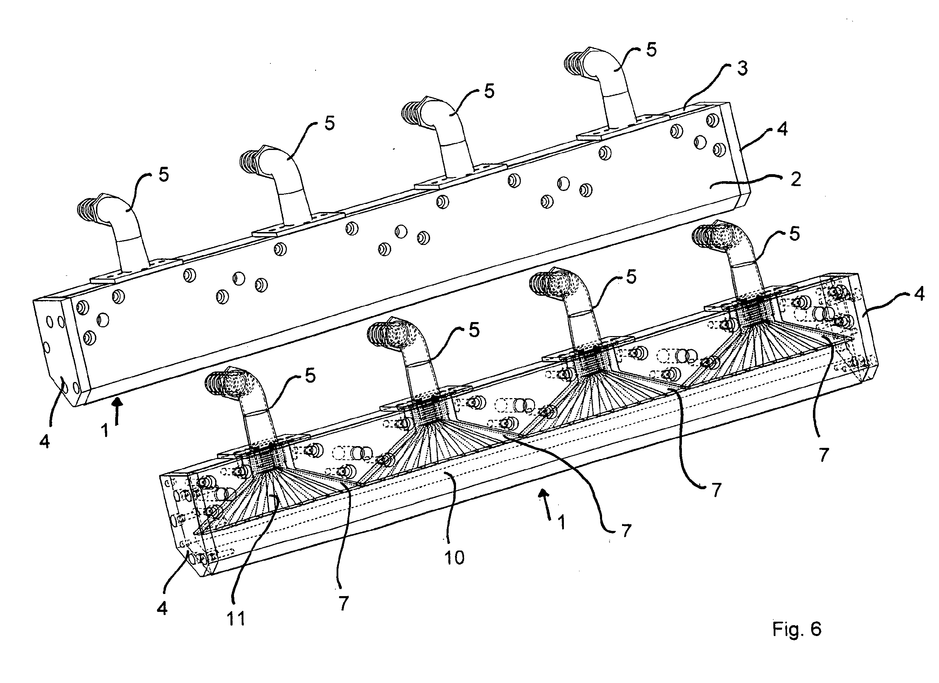

Die Fig. 5 und 6 zeigen ein zweites sowie ein drittes Beschichtungswerkzeug. Beim zweiten Beschichtungswerkzeug sind zur Vergrößerung der zweiten Breite B2 zwei Verteilungsräume 7 mit darin aufgenommenen Montageelementen 11 vorgesehen. Bei dem in Fig. 6 gezeigten dritten Beschichtungswerkzeug sind zur weiteren Vergrößerung der zweiten Breite B2 vier Verteilungsräume 7 vorgesehen, in denen jeweils ein Montagelement 11 aufgenommen ist.

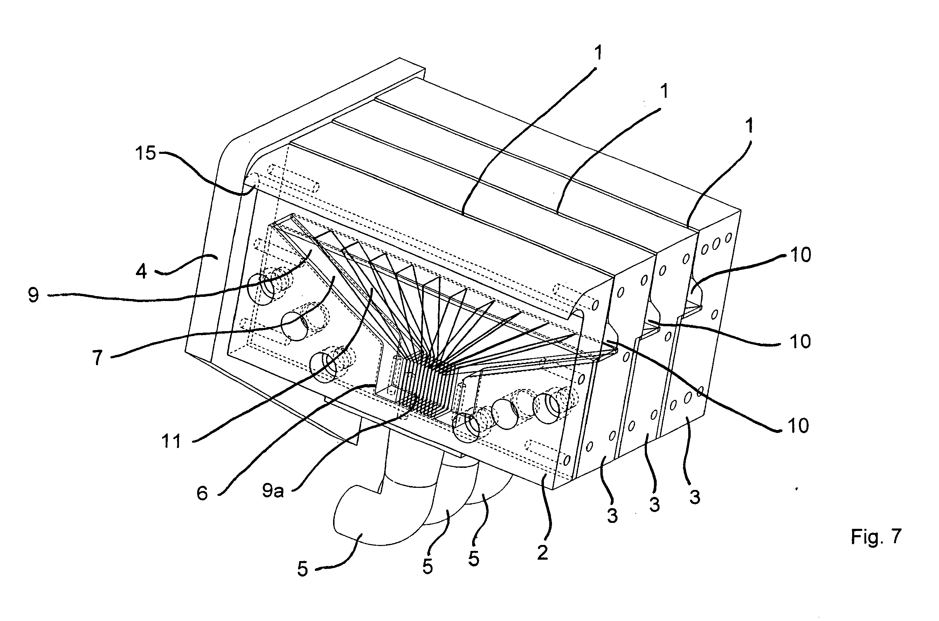

Fig. 7 zeigt eine perspektivische Ansicht eines vierten Beschichtungswerkzeugs. Das vierte Beschichtungswerkzeug weist hinter einander drei Schlitzdüsen 1 auf. Zweite Schlitzdüsenplatten 3 sind treppenartig ansteigend angeordnet. In jeder der zweiten Schlitzdüsenplatten 3 ist ein Verteilungsraum 7 gebildet, in dem wiederum ein Montageelement 11 aufgenommen ist. Mit dem Bezugszeichen 15 ist eine Nase bezeichnet, über welche ein aus den Schlitzdüsen 1 austretender aus mehreren übereinander liegenden Flüssigkeitsfilmen gebildeter geschichteter Flüssigkeitsfilm nach Art eines "Vorhangs" abläuft und auf ein (hier nicht gezeigtes) Substrat aufgetragen wird.

Die Funktion des erfindungsgemäßen Beschichtungswerkzeugs ist wie folgt:

Durch das Zuführrohr 5 wird die auf ein (hier nicht gezeigtes) Substrat aufzutragende Flüssigkeit zugeführt. Die zugeführte Flüssigkeit wird im Kanal 6 durch die Zuführkanäle 9a in Flüssigkeitsteilströme geteilt. Ein in jedem der Zuführ-9a sowie der Verteilungskanäle 9 befindlicher Flüssigkeitsteilstrom steht im Wesentlichen mit demselben Druck an der Schlitzdüse 1 bzw. am der Schlitzdüse 1 stromaufwärts vorgeordneten Schlitzdüsenraum 10 an. Also ist die Druckverteilung an der Schlitzdüse 1, ggf. im Schlitzdüsenraum 10, über die gesamte zweite Breite B2 hinweg besonders gleichförmig. Infolge dessen ist der Massedurchsatz bzw. die Masseflussrate über die gesamte zweite Breite B2 hinweg ebenfalls im Wesentlichen konstant.

Bei dem in den vorliegenden Ausführungsbeispielen gezeigten Beschichtungswerkzeug strecken sich die Wände 8 bis zum Ende des Verteilungsraums 7. Es ist allerdings auch denkbar, dass sich die Wände 8 bis in den Schlitzdüsenraum 10 erstrecken. Ferner ist es möglich, dass die Wände 8 im Bereich ihrer kanalseitigen Enden und/oder im Bereich ihrer schlitzdüsenseitigen weiteren Enden Durchbrüche aufweisen. Damit können eventuell noch auftretende Druckfluktuationen ausgeglichen werden.

In den vorliegenden Ausführungsbeispielen weisen die Zuführkanäle 9a sowie die Verteilungskanäle 9 einen rechteckigen Querschnitt auf. Selbstverständlich ist es auch denkbar, dass der Querschnitt der Zuführkanäle 9a sowie der Verteilungskanäle 9 eine andere Geometrie aufweist.

Ein Öffnungsquerschnitt der Verteilungskanäle 9 kann am schlitzdüsenseitigen Ende variieren. Es kann beispielsweise sein, dass ein Öffnungsquerschnitt im Bereich der Mittelebene M kleiner ist als ein Öffnungsquerschnitt der Verteilungskanäle 9 an den beiden Rändern des Verteilungsraums 7.

Die vorliegende Erfindung kann auf unterschiedliche Arten von Beschichtungswerkzeugen angewendet werden. Beispielsweise kann sie auch auf 2-Kammer-Beschichtungswerkzeuge angewendet werden, bei denen stromabwärts des Schlitzdüsenraums 10 ein sich über die zweite Breite B2 erstreckender Pufferraum vorgesehen ist. Ferner kann die Erfindung auf Gleitfilm-Vorgang-Beschichtungswerkzeuge, Gleitfilm-Fließer-Beschichtungswerkzeuge sowie Schlitzdüsen-Fließer-Beschichtungswerkzeuge und dgl. angewendet werden.

### Bezugszeichenliste

- 1: Schlitzdüse
- 2: erste Schlitzdüsenplatte
- 3: zweite Schlitzdüsenplatte
- 4: Seitenplatte
- 5: Zuführrohr
- 6: Kanal
- 7: Verteilungsraum
- 8: Wand
- 9: Verteilungskanal
- 9a: Zuführkanal
- 10: Schlitzdüsenraum
- 11: Montageelement
- 12: Grundplatte
- 13: Begrenzungselement
- 14: Gewindebohrung
- 15: Nase

- B1: erste Breite
- B2: zweite Breite
- B3: dritte Breite
- M: Mittelebene
- S: Strömungsrichtung

## Patentansprüche

1. Beschichtungswerkzeug zum Auftragen eines Flüssigkeitsfilms auf ein Substrat, wobei stromaufwärts einer sich im Wesentlichen über eine gesamte erste Breite (B1) des Beschichtungswerkzeugs ununterbrochen erstreckenden Schlitzdüse (1) zum Erzeugen des Flüssigkeitsfilms ein Verteilungsraum (7) zum Verteilen der Flüssigkeit über eine zweite Breite (B2) der Schlitzdüse (1) vorgesehen ist, wobei stromaufwärts des Verteilungsraums (7) zumindest ein eine dritte Breite (B3) aufweisender Kanal (6) zum Zuführen von Flüssigkeit vorgesehen ist, wobei die dritte Breite (B3) kleiner als die zweite Breite (B2) ist, und wobei im Verteilungsraum (7) eine Vielzahl von Verteilungskanälen (9) mit in Strömungsrichtung (S) zunehmender Querschnittsfläche vorgesehen ist,
**dadurch gekennzeichnet, dass**
jeder der Verteilungskanäle (9) mit einem dazu korrespondierenden, im Kanal (6) vorgesehenen Zuführkanal (9a) verbunden ist.

2. Beschichtungswerkzeug nach Anspruch 1, wobei die Verteilungskanäle (9) durch im Wesentlichen senkrecht zu einer Schlitzdüsenplatte (2, 3) der Schlitzdüse (1) verlaufende Wände (8) begrenzt sind.

3. Beschichtungswerkzeug nach Anspruch 1 oder 2, wobei sich die Verteilungskanäle (9) vom Kanal (6) bis in die Nähe der Schlitzdüse (1) erstrecken.

4. Beschichtungswerkzeug nach einem der vorhergehenden Ansprüche, wobei ein zwischen benachbarten Wänden (8) gebildeter Abstand vom Kanal (6) zur Schlitzdüse (1) hin zunimmt.

5. Beschichtungswerkzeug nach einem der vorhergehenden Ansprüche, wobei zumindest mehrere der Wände (8) zumindest einen Durchbruch aufweisen.

6. Beschichtungswerkzeug nach Anspruch 5, wobei die Durchbrüche in den jeweiligen Wänden (8) im Bereich deren kanalseitiger erster Enden und/oder im Bereich deren schlitzdüsenseitiger zweiter Enden vorgesehen sind.

7. Beschichtungswerkzeug nach einem der vorhergehenden Ansprüche, wobei die Wände (8) sich zur Begrenzung der Zuführkanäle (9a) bis in den Kanal (6) erstrecken.

8. Beschichtungswerkzeug nach einem der vorhergehenden Ansprüche, wobei die Verteilungskanäle (9) und/oder die Zuführkanäle (9a) Bestandteil zumindest eines in den Verteilungsraum (7) einsetzbaren Montageelements (11) sind.

9. Beschichtungswerkzeug nach Anspruch 8, wobei das Montageelement (11) aus Kunststoff hergestellt ist.

10. Beschichtungswerkzeug nach einem der vorhergehenden Ansprüche, wobei zwischen der Schlitzdüse (1) und dem Verteilungsraum (7) ein zur Schlitzdüse (1) hin sich öffnender Pufferraum (10) vorgesehen ist.

11. Beschichtungswerkzeug nach Anspruch 10, wobei der Pufferraum (10) mit dem Verteilungsraum (7) über einen sich im Wesentlichen über die zweite Breite (B2) erstreckenden schlitzartigen Durchgang verbunden ist.

## Claims

1. Coating tool for applying a fluid film onto a substrate, wherein a distribution space (7) for distributing the fluid over a second width (B2) of a slot nozzle (1) for producing the fluid film is provided upstream from the slot nozzle (1) which is uninterruptedly extending essentially across the entirety of a first width (B1) of the coating tool, wherein at least one channel (6) for feeding fluid is provided upstream from the distribution space (7), said channel (6) having a third width (B3), wherein the third width (B3) is smaller than the second width (B2), and wherein a plurality of distribution channels (9) having an increasing cross sectional area in the direction of flow (S) are provided in the distribution space (7),
**characterized in that**
each of the distribution channels (9) is connected with a thereto corresponding feed channel (9a) provided in the channel (6).

2. Coating tool as defined in claim 1, wherein the distribution channels (9) are limited by walls (8) running essentially perpendicular to a slot nozzle plate (2,3) of the slot nozzle (1).

3. Coating tool as defined in claim 1 or 2, wherein the distribution channels (9) extend from the channel (6) up to the vicinity of the slot nozzle (1).

4. Coating tool as defined in one of the preceding claims, wherein a distance created between adjacent walls (8) increases from the channel (6) towards the slot nozzle (1).

5. Coating tool as defined in one of the preceding claims, wherein at least several of the walls (8) have at least one breakthrough.

6. Coating tool as defined in claim 5, wherein the breakthroughs are provided in the respective walls (8) in the area of their channel-sided first ends and/or in the area of their slot nozzle-sided second ends.

7. Coating tool as defined in one of the preceding claims, wherein the walls (8) for limiting the feed channels (9a) extend up into the channel (6).

8. Coating tool as defined in one of the preceding claims, wherein the distribution channels (9) and/or the feed channels (9a) are part of at least one mounting element (11) which can be inserted into the distribution space (7).

9. Coating tool as defined in claim 8, wherein the mounting element (11) is made of plastic.

10. Coating tool as defined in one of the preceding claims, wherein a buffer space (10) opening towards the slot nozzle (1) is provided between the slot nozzle (1) and the distribution space (7).

11. Coating tool as defined in claim 10, wherein the buffer space (10) is connected with the distribution space (7) via a slot-like passageway extending essentially across the second width (B2).

## Revendications

1. Outil de revêtement pour l'application d'un film de liquide sur un substrat, dans ledit outil en amont d'une buse à fente (1) s'étendant de façon continue essentiellement sur une première largeur totale (B1) de l'outil de revêtement et destinée à produire le film de liquide, un espace de répartition (7) est prévu pour répartir le liquide sur une deuxième largeur (B2) de la buse à fente (1), au moins un canal (6) présentant une troisième largeur (B3) et destiné à amener du liquide est prévu en amont de l'espace de répartition (7); la troisième largeur (B3) étant inférieure à la deuxième largeur (B2), et une pluralité de canaux de répartition (9) de surface de section transversale augmentant dans le sens d'écoulement (S) étant prévue dans l'espace de répartition (7),
**caractérisé en ce que**
chacun des canaux de répartition (9) est relié à un canal d'amenée (9a) lui correspondant prévu dans le canal (6).

2. Outil de revêtement selon la revendication 1, où les canaux de répartition (9) sont limités par des parois (8) étant essentiellement verticales par rapport à une plaque de buse à fente (2, 3) de la buse à fente (1).

3. Outil de revêtement selon la revendication 1 ou 2, où les canaux de répartition (9) s'étendent du canal (6) jusqu'à proximité de la buse à fente (1).

4. Outil de revêtement selon l'une des revendications précédentes, où un écartement formé entre des parois (8) adjacentes augmente à partir du canal (6) en direction de la buse à fente (1).

5. Outil de revêtement selon l'une des revendications précédentes, où au moins plusieurs des parois (8) présentent au moins un passage.

6. Outil de revêtement selon la revendication 5, où les passages sont prévus dans les parois (8) respectives dans la zone de leurs premières extrémités côté canal et/ou dans la zone de leurs secondes extrémités côté buse à fente.

7. Outil de revêtement selon l'une des revendications précédentes, où les parois (8) s'étendent pour la limitation des canaux d'amenée (9a) jusque dans le canal (6).

8. Outil de revêtement selon l'une des revendications précédentes, où les canaux de répartition (9) et/ou les canaux d'amenée (9a) sont des composants d'au moins un élément de montage (11) insérable dans l'espace de répartition (7).

9. Outil de revêtement selon la revendication 8, où l'élément de montage (11) est réalisé en matière plastique.

10. Outil de revêtement selon l'une des revendications précédentes, où un espace tampon (10) s'ouvrant en direction de la buse à fente (1) est prévu entre la buse à fente (1) et l'espace de répartition (7).

11. Outil de revêtement selon la revendication 10, où l'espace tampon (10) est relié à l'espace de répartition (7) par l'intermédiaire d'un passage en forme de fente s'étendant essentiellement sur la deuxième largeur (B2).
